# EUROPEAN PATENT APPLICATION

(11) **EP 3 702 635 A1**
(43) Date of publication of application: **02.09.2020**
(21) Application number: 20155619.8
(22) Date of filing: 05.02.2020
(51) Int. Cl.: F16D 13/52, F16D 25/0638

(54) **VEHICLE DRIVELINE CLUTCHES**

(30) Priority: 01.03.2019 GB 201902835
(71) Applicant: Raicam Clutch Limited, Milton Keynes Buckinghamshire MK9 1FF (GB)
(72) Inventor: HOMAN, Keith, Kidderminster, Worcestershire DY11 5NK (GB); STRUVE, Benjamin Chetwood, Kenilworth, Warwickshire CV8 2GN (GB)
(74) Representative: Morrall, Roger

(57) **Abstract**

A vehicle driveline clutch assembly (10) having a flywheel (11), a clutch housing (12) secured to the flywheel for rotation therewith and forming an annular clutch volume (14) with the flywheel. An annular output member (15) is located adjacent the flywheel with its radially outer portion within the clutch volume and interleaved annular clutch plates (16, 17) are located within the clutch volume between the output member and housing and are alternately splined for rotation with the housing or output member, spring means (18) act between the flywheel and the output member via a thrust bearing (19) to bias the output member away from the flywheel to bring the clutch plates into engagement to engage drive through the clutch assembly and clutch release means (20) act on the output member (15) to move the output member towards the flywheel (11) against the spring means (18) to release the clutch when required.

## Description

This invention relates to vehicle driveline clutches and in particular, though not exclusively, to such clutches for use in hybrid vehicle drivelines where space is often at a premium and axial compactness is therefore important.

It is an object of the present invention to provide an axially compact vehicle driveline clutch assembly which is suitable for use in, for example, a hybrid vehicle driveline.

Thus according to the present invention there is provided a vehicle driveline clutch assembly having a flywheel, a clutch housing secured to the flywheel for rotation therewith and forming an annular clutch volume with the flywheel with interleaved annular clutch plates within the clutch volume, the assembly being characterised in that an annular output member is located adjacent the flywheel with its radially outer portion within the clutch volume, the interleaved annular clutch plates are located within the clutch volume between the output member and housing and are alternately splined for rotation with the housing or output member, spring means act between the flywheel and the output member via a thrust bearing to bias the output member away from the flywheel to bring the clutch plates into engagement thus providing drive through the clutch assembly, and clutch release means act on the output member to move the output member towards the flywheel against the spring means to release the clutch when required.

The annular output member may have a radially inner splined hub portion for engagement with an output shaft of the assembly.

The spring means may comprise one or more stacked Belleville springs.

The clutch release means may comprise an annular slave cylinder concentric with the output shaft and acting on the output member via a clutch release bearing.

The above clutch assembly is compact in an axial sense compared to a conventional diaphragm spring operated clutch assembly which makes it particularly suitable for use in hybrid vehicle drivelines where axial space is at a premium. Also, the clamp and release load in such a clutch assembly are the same which enables the clutch release travel to be small e.g. around 1 to 1.5 mm assuming negligible losses. This makes the clutch assembly suitable for applications where the clutch is operating more as a switch such as when connecting or disconnecting an internal combustion engine in a hybrid vehicle driveline.

The invention also provides a vehicle driveline damping and clutch arrangement comprising a clutch assembly as described above characterised in that the flywheel of the clutch assembly forms an output flywheel of a twin mass flywheel with an input flywheel of the twin mass flywheel supported off the output flywheel via a bearing and connectable with a prime mover of the vehicle driveline, the input flywheel being drivingly connected with the output flywheel via a damping means to transmit torque through the twin mass flywheel and to absorb torsional vibrations in the associated driveline.

The damping means may comprise arcuate compression springs which are compressed on relative movement of the input and output flywheels during use of the damping and clutch arrangement.

The springs are preferably disposed radially outboard of the output flywheel of the twin mass flywheel to provide an axially compact arrangement.

The invention also provides a vehicle bulkhead assembly for attachment to a vehicle engine or other fixed structure of the vehicle which incorporates an integrally formed hydraulic slave cylinder for operation of a vehicle driveline clutch assembly as described above.

The slave cylinder may be concentric with an output shaft of the clutch.

A hydraulic supply line for the slave cylinder may also be formed integrally within the bulkhead.

The slave cylinder may incorporate an integral sensor for sensing the position of a piston of the cylinder and hence the position of engagement of the associated clutch. The invention also provides a hybrid vehicle incorporating a clutch assembly or driveline damping and clutch assembly as described above.

The present invention will now be described, by way of example only, with reference to the accompanying drawings in which:-
Figure 1 shows a perspective sectional view of part of a vehicle driveline clutch assembly in accordance with the present invention;

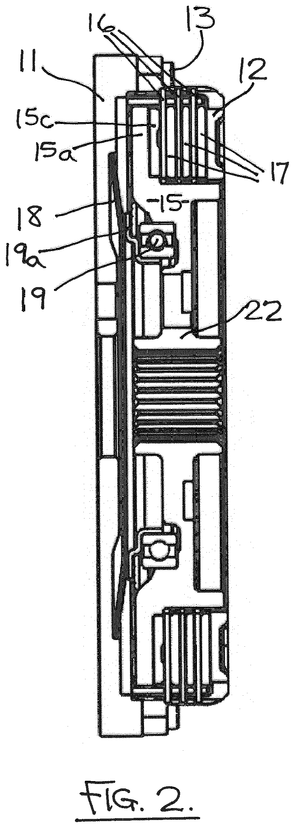

Figure 2 shows a full axial section through the clutch assembly of Figure 1;
Figure 3 shows a perspective sectional view of part of a combined vehicle driveline damping and clutch arrangement using the clutch assembly of Figures 1 and 2;
Figure 4 shows a complete axial section of the arrangement of Figure 3;
Figure 5 shows an external t5perspective view of the assembly of Figure 3 and 4 viewed in the direction of the arrow A of Figure 3;
Figure 6 shows an exploded perspective view of a twin mass flywheel damper used in the assembly of Figures 3 to 5;
Figure 7 shows a perspective view of part of an alternative clutch assembly in accordance with the present invention which has different clutch disc mounting;
Figure 8 shows an exploded perspective view of the twin mass flywheel shown in Figure 7;
Figure 9 shows diagrammatically a hybrid vehicle driveline for which the clutch assembly of the present invention is particularly suitable;
Figure 10 shows a section through part of the clutch assembly shown in Figures 7 and 8 installed in the hybrid driveline of Figure 9;
Figures 11 and 12 show different sections through half of a concentric slave cylinder suitable for operating the clutch assembly of the present invention, and
Figures 13 and 14 show external perspective views in opposite directions of a bulkhead assembly suitable for supporting the concentric slave cylinder of Figures 11 and 12.

Referring to the drawings, a vehicle drive line clutch assembly 10 has a flywheel 11 and a clutch housing 12 secured by studs 13 to the flywheel for rotation therewith and forming an annular clutch volume 14 with the flywheel. An annular output member 15 is located adjacent the flywheel with its radially outer portion 15a within the clutch volume 14. Interleaved annular clutch plates 16 and 17 are located within the clutch volume between the output member and housing and are alternately splined for rotation with the housing or output member. Plates 16 are provided with cut outs 16a which engage spline-like portions 12a of the housing 12 and plates 17 have cut outs in their inner periphery which engage splines 15b on output member 15. An organic facing 15c is bonded to output member portion 15a to reduce the transmission of heat from clutch discs 16, 17 to the remainder of the assembly.

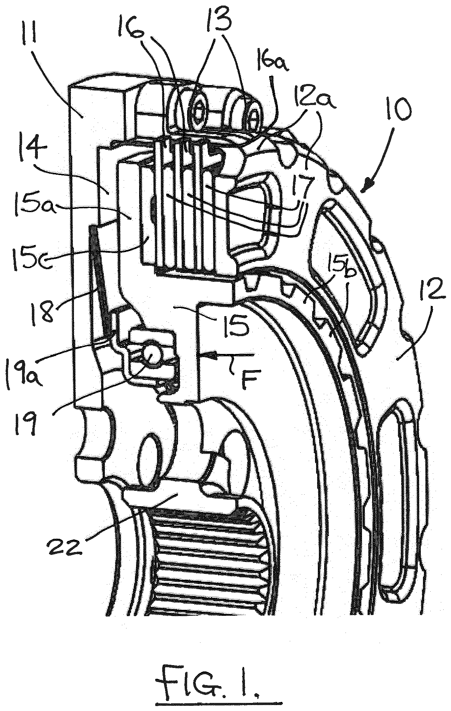

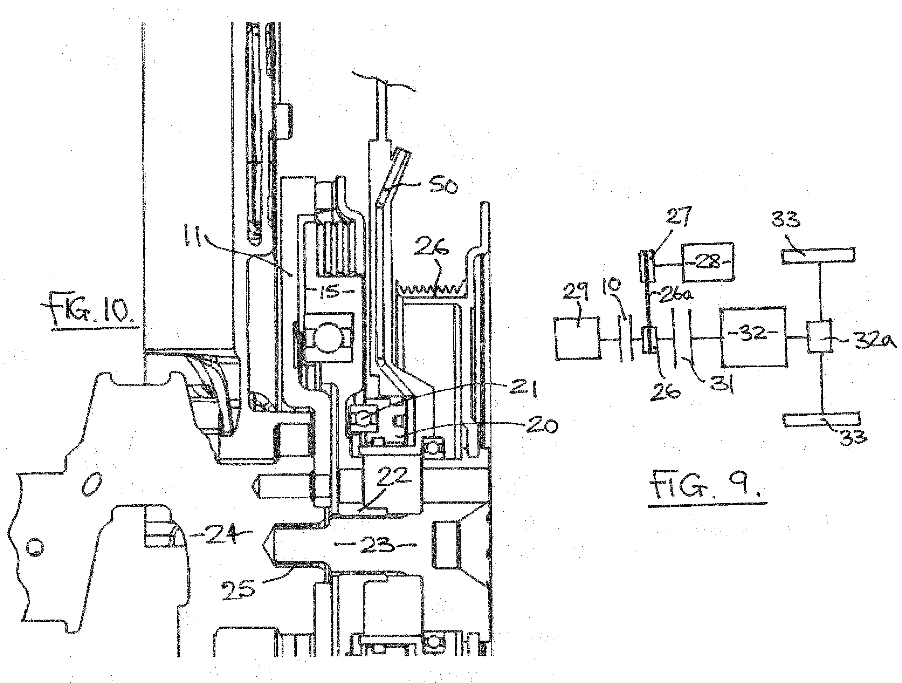

In accordance with the present invention spring means in the form of stacked Belleville springs 18 act between the flywheel 11 and the output member 15 via a thrust bearing 19 and pressure ring 19a to bias the output member 15 away from the flywheel to bring the clutch plates 16 and 17 into engagement and thus engage drive through the clutch assembly 10. A clutch release means in the form of, for example, a slave cylinder 20 (see Figure 10) acts on the output member 15 via a thrust bearing 21 to move the output member towards the flywheel 11 as indicated by arrow F in Figure 1 against the action of Belleville springs 18 to release the clutch when required. It should be noted that the clutch assembly includes over stroke protection as should the Belleville springs 18 be pressed fully flat against flywheel 11 the bearing 19 will rotate.

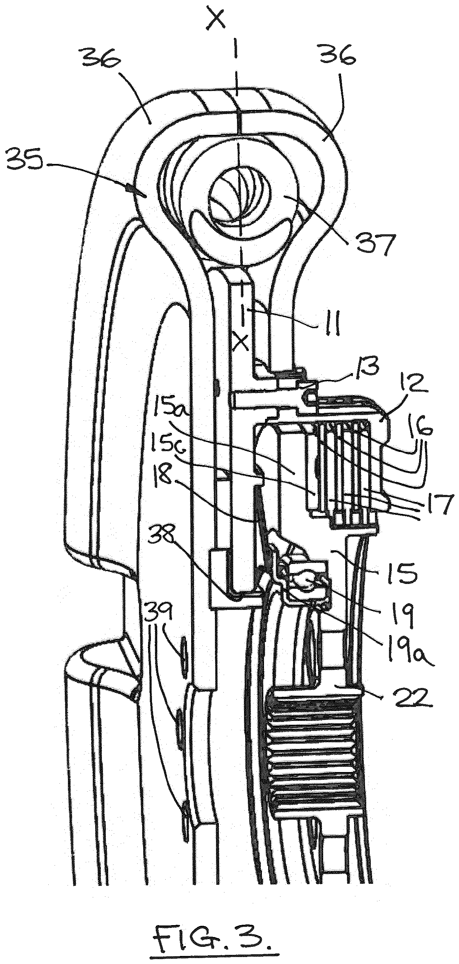

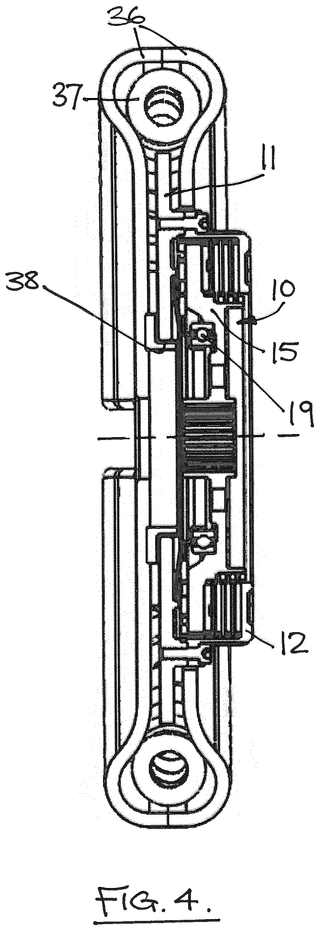

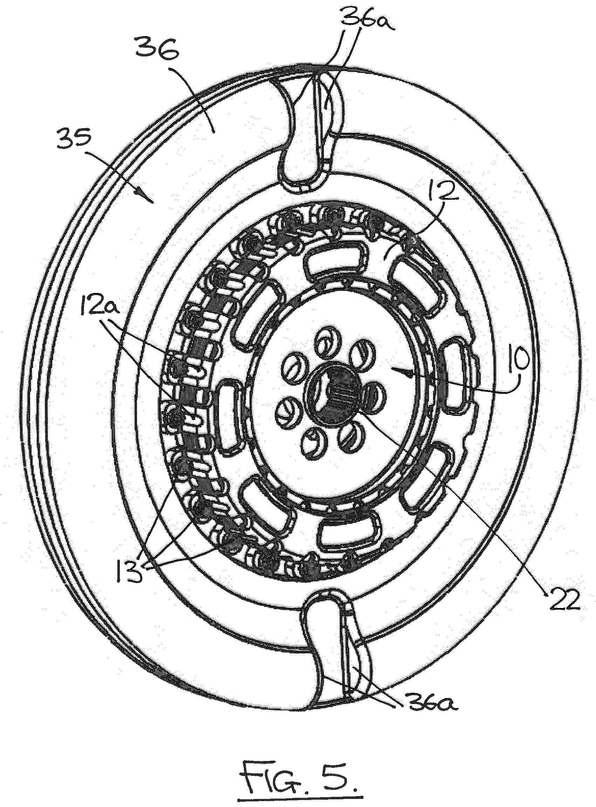

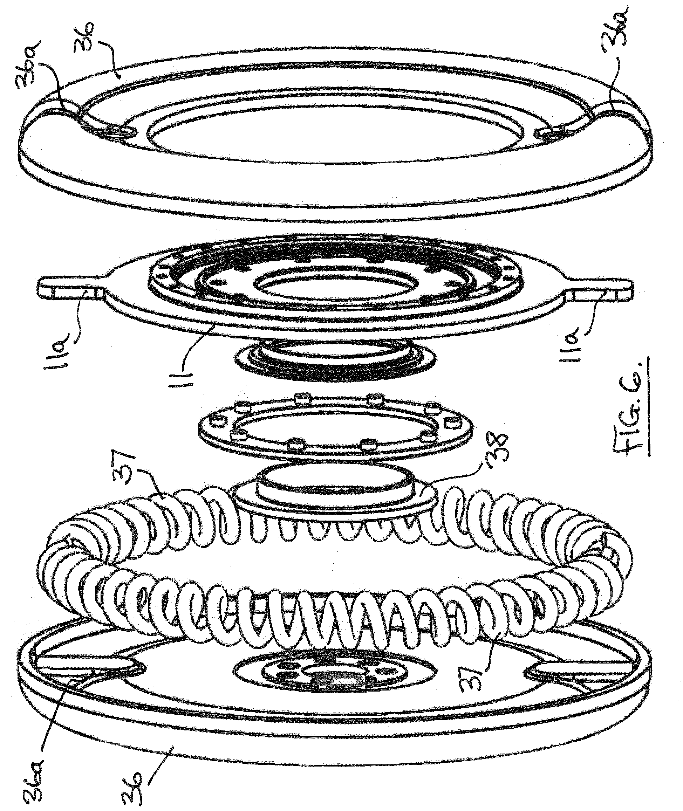

The output member 15 has a radially inner splined hub portion 22 which, in the example application shown in Figure 10, engages an output shaft 23 (see Figure 10) which is supported in the end of an engine crankshaft 24 via a bearing 25. Output shaft 23 rotates with a drive pulley 26 which, in the hybrid vehicle driveline example shown in Figure 9, connects with an output pulley 27 of an electric motor 28 via a drive belt 26a. Shaft 23 is also drivingly connected with a launch clutch or torque converter 31. A combustion engine 29 drives the clutch assembly 10 and launch clutch 31 drives a transmission 32 which in turn drives road wheels 33 of the vehicle via a differential 32a. Figures 3 to 6 show a combined damping and clutch assembly in which flywheel 11 forms the output flywheel of a twin mass flywheel 35. Twin mass flywheel 35 has an input flywheel in the form of a housing 36 which encases two arcuate compression springs 37. Housing 36 can be connected, for example, to the crankshaft of engine 29 via bolt holes 39. Output flywheel 11 has two radially extending projections 11a which extend in the central plane X-X of Figure 3 between the ends of the curved springs 37. Housing 36 is in two halves which also have radially extending abutments 36a which again extend radially between the ends of springs 37 on both sides of the projections 11a.

Thus, in the known manner, the engine 29 drives housing 36 which passes the engine torque to one end the springs 37 via abutments 36a and the other end of springs 37 passes the torque to projections 11a and hence to flywheel 11. Thus springs 37 connect the two flywheels 11 and 36 and their resilience damps any torsional vibration which occur in the driveline.

This arrangement of damper and clutch assembly is particularly compact in an axial sense as most of the twin mass flywheel is radially outboard of the clutch assembly.

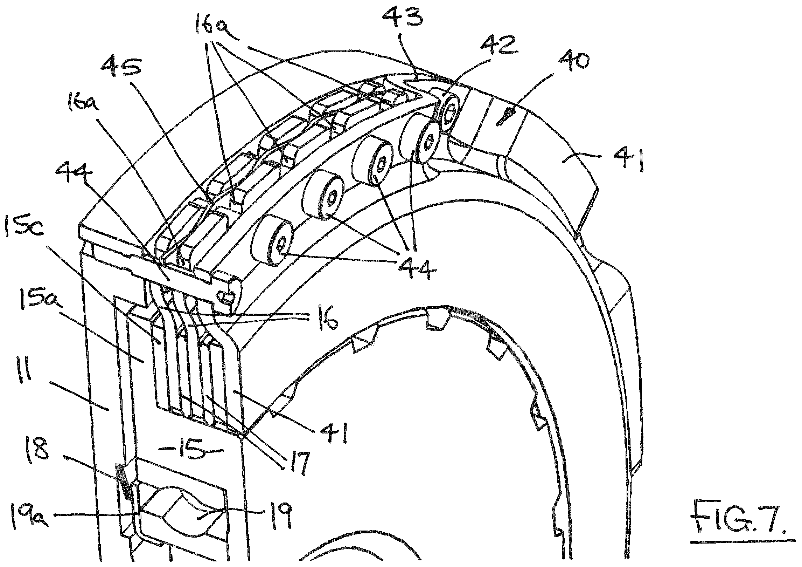

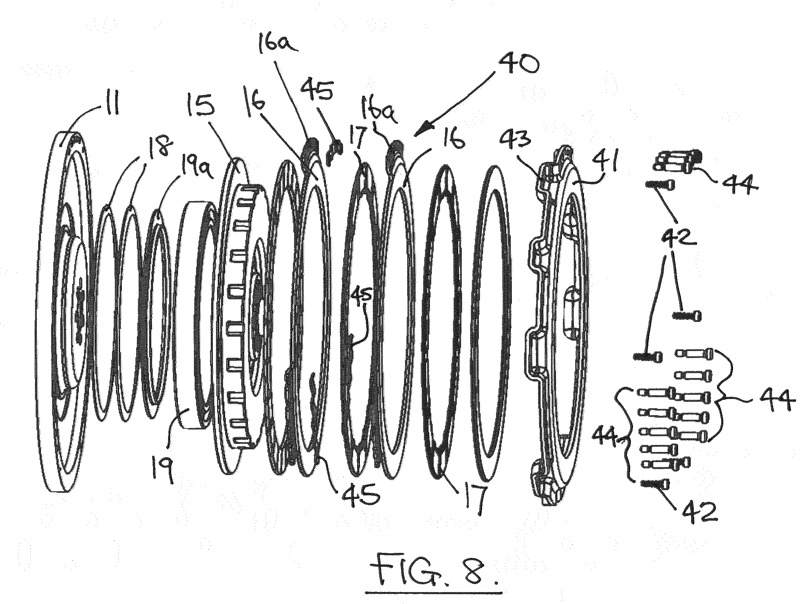

Figure 7 and 8 shows an alternative form of clutch assembly 40 in accordance with the present invention which operates in a similar way to that described above. In Figures 7 and 8 depressed rim portions 43 of housing 41 are secured to flywheel 11 by studs 42. The clutch discs 16 slide on three groups of five longer studs 44 which are received in cut outs 16a of the discs 16. Corrugated springs 45 are located on studs 44 to assist in disengaging the clutch assembly.

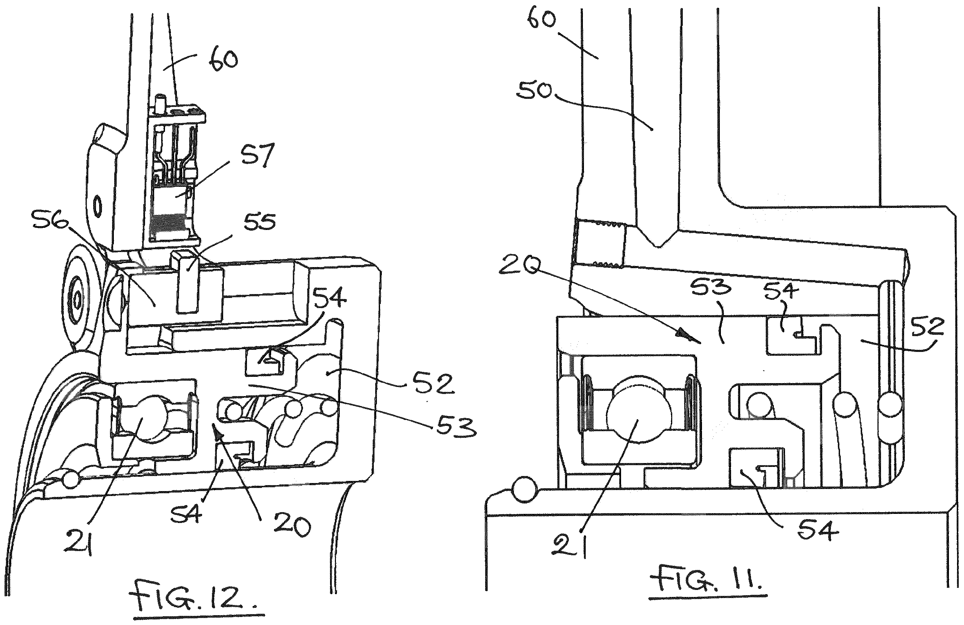

Figures 11 and 12 show sections through the concentric slave cylinder 20 which is fed by a hydraulic supply line 50 which communicates fluid pressure to a chamber 52 in which a piston 53 slides. Piston has seals 54 and, as can be seen from Figure 12, carries a magnet 55 mounted on a piston extension 56. The movement of this magnet relative to a position sensor 57 indicates the axial position of piston 53 in chamber 52 and hence the engagement position of the clutch.

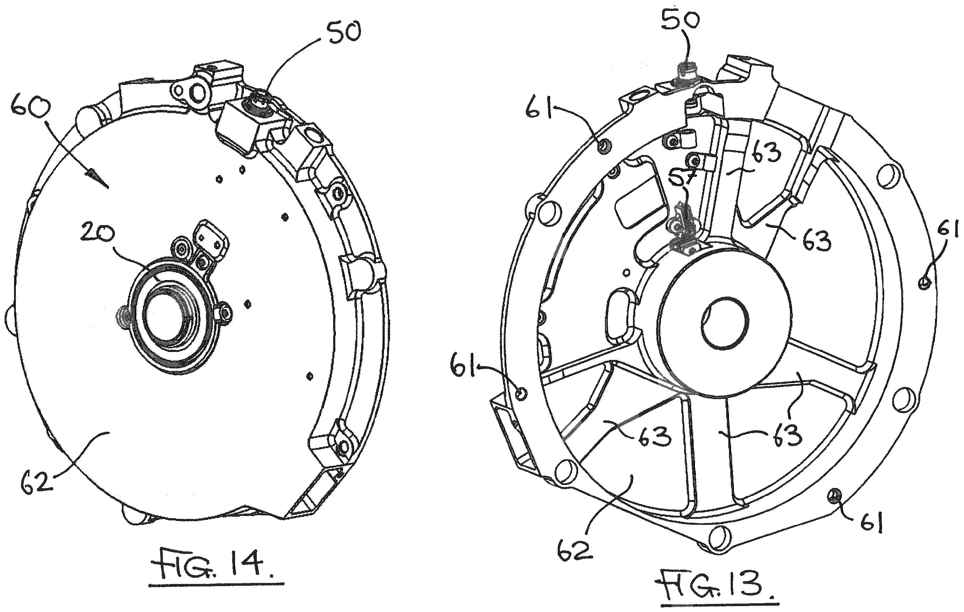

As can be seen from Figures 10, 13 and 14 the concentric slave cylinder 20 can conveniently be formed integrally in a bulkhead assembly 60 which is secured via holes 61 to an engine or other fixed structure of the vehicle. The hydraulic supply line 50 for the slave cylinder 20 may also be integrally formed in the bulkhead 60. The position sensor 57 is also conveniently carried on the bulkhead together with other items.

The bulkhead shown is generally circular in shape a convenient shape for securing to the end of an engine block and has a main web portion 62 and radial reinforcing ribs 63 on one side. The bulkhead may be made from a variety of materials such as cast metal or plastics material.

Although the clutch assembly, damper arrangement and bulkhead construction have been described above in relation to a hybrid vehicle driveline it will be understood that they are also usable in other non-hybrid vehicle driveline applications.

## Claims

1. A vehicle driveline clutch assembly (10) having a flywheel (11), a clutch housing (12) secured to the flywheel for rotation therewith and forming an annular clutch volume (14) with the flywheel with interleaved annular clutch plates (16,17) within the clutch volume, the assembly being **characterised in that** an annular output member (15) is located adjacent the flywheel with its radially outer portion (15a) within the clutch volume (14), the interleaved annular clutch plates (16,17) are located within the clutch volume between the output member and housing and are alternately splined for rotation with the housing or output member, spring means (18) act between the flywheel (11) and the output member (15) via a thrust bearing (19) to bias the output member away from the flywheel to bring the clutch plates (16,17) into engagement thus providing drive through the clutch assembly, and clutch release means (20) act on the output member (15) to move the output member towards the flywheel (11) against the spring means (18) to release the clutch when required.

2. A clutch assembly according to claim 1 **characterised in that** the annular output member (15) has a radially inner splined hub portion (22) for engagement with an output shaft of the assembly.

3. A clutch assembly according to claim 1 or 2 **characterised in that** the spring means comprises one or more stacked Belleville springs (18).

4. A clutch assembly according to claim 2 or 3 **characterised in that** the clutch release means comprises an annular slave cylinder (20) concentric with the output shaft and acting on the output member (15) via a clutch release bearing (21).

5. A vehicle driveline damping and clutch arrangement comprising a clutch assembly (10) according to any one of claims 1 to 4 **characterised in that** the flywheel (11) of the clutch assembly forms an output flywheel of a twin mass flywheel (35) with an input flywheel (36) of the twin mass flywheel supported off the output flywheel (11) via a bearing (38) and connectable with a prime mover of the vehicle driveline, the input flywheel (36) being drivingly connected with the output flywheel (11) via a damping means (37) to transmit torque through the twin mass flywheel (35) and to absorb torsional vibrations in the associated driveline.

6. An arrangement according to claim 5 **characterised in that** the damping means comprise arcuate compression springs (37) which are compressed on relative movement of the input and output flywheels (11,36) during use of the damping and clutch arrangement.

7. An arrangement according to claim 6 **characterised in that** the springs (37) are disposed radially outboard of the output flywheel (11) of the twin mass flywheel (35) to provide an axially compact arrangement.

8. A vehicle bulkhead assembly (60) for attachment to a vehicle engine or other fixed structure of the vehicle which incorporates an integrally formed hydraulic slave cylinder (20) for operation of a clutch assembly (10) according to any one of clams 1 to 4.

9. An assembly according to claim 8 **characterised in that** the slave cylinder (20) is concentric with an output shaft of the clutch.

10. An assembly according to claim 8 or 9 **characterised in that** a hydraulic supply line (50) for the slave cylinder (20) is also formed integrally within the bulkhead (60).

11. An assembly according to any one of claims 8 to 10 **characterised in that** the slave cylinder (20) incorporates an integral sensor (55,57) for sensing the position of a piston (53) of the cylinder (20) and hence the position of engagement of the associated clutch.

12. An assembly according to any one of claims 8 to 11 in which the bulkhead (60) is formed from cast metal or plastics material.

13. A hybrid vehicle **characterised by** incorporating a clutch assembly (10) according to any one of claims 1 to 4 or a driveline damping arrangement according to any one of claims 5 to 7.
